# DEMANDE DE BREVET EUROPEEN

(11) **EP 1 643 710 A1**
(43) Date de publication de la demande: **05.04.2006**
(21) Numéro de dépôt: 04104784.6
(22) Date de dépôt: 30.09.2004
(51) Int. Cl.: H04L 29/06

(54) **Procédé de mise à jour d'une table de correspondance entre une adresse et un numéro d'identification**

(71) Demandeur: Nagravision S.A., 1033 Cheseaux-sur-Lausanne (CH)
(72) Inventeur: Stransky, Philippe, 1033 Cheseaux-sur-Lausanne (CH)
(74) Mandataire: Wenger, Joel-Théophile

(57) **Abrégé**

La présente invention concerne un procédé de mise à jour d'une table de correspondance entre une adresse (AD) associée à une unité d'utilisateur dans un réseau de communication et un numéro unique d'identification (UA) associé à une unité d'utilisateur d'un groupe d'unités d'utilisateur gérés par un centre de gestion (CG). Des données sont échangées entre ce centre de gestion et une unité d'utilisateur spécifique (STB*) via le réseau de communication. Ces données sont acheminées en utilisant l'adresse (AD*) de l'unité d'utilisateur dans le réseau. Ce procédé comprend les étapes suivantes : recherche dans la table de correspondance, de l'adresse (AD*) de l'unité d'utilisateur dans le réseau de communication correspondant au numéro unique d'identification (UA*) de l'unité d'utilisateur spécifique (STB*); envoi de données à l'unité d'utilisateur (STB*) ayant le numéro unique d'identification (UA*) concerné, à l'adresse (AD*) correspondante du réseau de communication; vérification de la bonne réception des données; en cas de mauvaise réception, envoi d'une requête contenant un identifiant de l'unité d'utilisateur spécifique (STB*), cette requête étant envoyée à tout ou partie des unités d'utilisateur (STB) faisant partie du groupe; détection d'un message de retour d'une unité d'utilisateur (STB*) dont le numéro d'identification unique (UA*) correspond à l'identifiant contenu dans la requête; détermination de l'adresse (AD*) dans le réseau, utilisée par l'unité d'utilisateur (STB*) ayant émis le message de retour; mémorisation dans la table du centre de gestion, de l'adresse (AD*) de l'unité d'utilisateur dans le réseau, en liaison avec le numéro d'identification unique (UA*) de l'unité d'utilisateur (STB*) ayant émis le message de retour.

## Description

### DOMAINE DE L'INVENTION

La présente invention concerne un procédé de mise à jour d'une table de correspondance entre une adresse associée à une unité d'utilisateur dans un réseau de communication et un numéro unique d'identification associé à cette unité d'utilisateur d'un groupe d'unités d'utilisateur.

L'unité d'utilisateur permet en particulier l'accès à des données à accès conditionnel, ces données étant transmises par un réseau tel que par exemple Internet.

### ART ANTERIEUR

De façon conventionnelle, une unité d'utilisateur comporte des moyens de traitement de données, qui peuvent être un ordinateur, un décodeur ou un autre élément similaire, et un module de sécurité en charge des opérations cryptographiques associées à l'accès ou au traitement des données. De façon bien connue, ce module de sécurité peut être réalisé essentiellement selon quatre formes distinctes. L'une d'elles est une carte à microprocesseur, une carte à puce, ou plus généralement un module électronique (ayant une forme de clé, de badge,...). Un tel module est généralement amovible et connectable au décodeur. La forme avec contacts électriques est la plus utilisée, mais n'exclut pas une liaison sans contact par exemple de type ISO 14443.

Une deuxième forme connue est celle d'un boîtier de circuit intégré placé, généralement de façon définitive et inamovible dans le boîtier du décodeur. Une variante est constituée d'un circuit monté sur un socle ou connecteur tel qu'un connecteur de module SIM.

Dans une troisième forme, le module de sécurité est intégré dans un boîtier de circuit intégré ayant également une autre fonction, par exemple dans un module de désembrouillage du décodeur ou le microprocesseur du décodeur.

Dans une quatrième forme de réalisation, le module de sécurité n'est pas réalisé sous forme matérielle, mais sa fonction est mise en oeuvre sous forme uniquement logicielle. Etant donné que dans les quatre cas, bien que le niveau de sécurité diffère, la fonction est identique, on parlera de module de sécurité quelle que soit la manière de réaliser sa fonction ou la forme que peut prendre ce module.

L'unité d'utilisateur comprend un numéro unique d'identification qui peut être stocké dans les moyens de traitement des données et/ou dans le module de sécurité.

De façon conventionnelle, plusieurs unités d'utilisateur forment un groupe qui est géré par un centre de gestion. Dans le cadre de la présente invention, les unités d'utilisateur et le centre de gestion peuvent communiquer entre eux par un réseau de communication qui peut être notamment un réseau global tel qu'Internet. Comme cela est bien connu de l'homme du métier, lorsque le centre de gestion doit envoyer un message à une unité d'utilisateur appartenant au groupe dont il a la gestion, le message est envoyé à une adresse spécifique liée au réseau de communication. Cette adresse est mémorisée dans une table du centre de gestion. Elle est associée au numéro unique d'identification de l'unité d'utilisateur de telle sorte que lorsque le centre de gestion doit envoyer un message à une unité d'utilisateur spécifique ayant un numéro unique d'identification donné, le centre de gestion cherche dans la table le numéro d'identification de l'unité concernée, prend l'adresse correspondante et envoie le message en utilisant l'adresse ainsi trouvée.

Généralement, l'adresse dans le réseau de communication ne change pas ou relativement rarement. Il peut toutefois arriver que celle-ci soit modifiée sans que le centre de gestion ne soit informé de ce changement. Dans ce cas, celui-ci n'est plus en mesure d'envoyer un message à la bonne adresse puisque la table de correspondance entre les adresses de communication et les numéros d'identification n'est pas automatiquement mise à jour.

Dans la pratique, le centre de gestion envoie un message à l'adresse qu'il a mémorisé. Si cette adresse a changé, le message n'est pas délivré. Pour contrôler la bonne délivrance des messages, il est prévu que l'unité d'utilisateur envoie une quittance lorsqu'un message à été bien reçu. Lorsqu'une quittance n'est pas reçue par le centre de gestion après un temps déterminé suivant l'envoi du message, le centre de gestion considère que le message n'a pas été reçu par l'unité d'utilisateur.

Deux procédures différentes sont mises en pratique pour gérer les changements d'adresse et pour envoyer un message à l'unité d'utilisateur concernée.

Selon l'une des procédures, l'unité d'utilisateur envoie son numéro unique d'identification à chaque enclenchement. Ce numéro étant envoyé par le réseau de communication en utilisant une adresse de communication spécifique, la correspondance entre cette adresse et le numéro d'identification peut être établie et mémorisée à chaque enclenchement.

Cette procédure présente l'inconvénient que les messages envoyés sont très souvent inutiles et occupent de la bande passante qui pourrait être utilisées de façon plus judicieuse.

Une autre procédure consiste à démarrer une étape de réinitialisation lorsque l'unité d'utilisateur ne fonctionne plus. Cette procédure a pour objectif de transmettre le numéro d'identification unique au centre de gestion, par le biais du réseau de communication, en utilisant une adresse spécifique.

Dans ce cas, l'abonné doit patienter jusqu'à ce que la réinitialisation soit terminée. Ceci peut durer relativement longtemps, typiquement plusieurs minutes, pendant lesquelles le déchiffrement des données n'est pas possible.

### BUTS DE L'INVENTION

La présente invention se propose de pallier les inconvénients des procédés de l'art antérieur en réalisant un procédé qui permette une mise à jour automatique d'une table de correspondance entre les adresses du réseau de communication et le numéro unique d'identification d'unités d'utilisateur. Cette mise à jour se fait de façon optimale du fait que la recherche des adresses n'est entreprise que pour les adresses ayant changé. De la bande passante n'est donc pas occupée inutilement. De plus, la mise à jour se fait sans que l'utilisateur perde momentanément l'accès au service.

Ce but est atteint par un procédé de mise à jour d'une table de correspondance entre une adresse associée à une unité d'utilisateur dans un réseau de communication et un numéro unique d'identification associé à une unité d'utilisateur d'un groupe d'unités d'utilisateur gérées par un centre de gestion, procédé dans lequel des données sont échangées entre ledit centre de gestion et au moins une unité d'utilisateur spécifique dudit groupe par l'intermédiaire dudit réseau de communication, ces données étant acheminées à l'unité d'utilisateur spécifique en utilisant l'adresse de ladite unité d'utilisateur dans ledit réseau, caractérisé en ce qu'il comprend les étapes suivantes :
- recherche dans ladite table de correspondance, de l'adresse de l'unité d'utilisateur dans ledit réseau de communication correspondant au numéro unique d'identification de l'unité d'utilisateur spécifique;
- envoi de données à l'unité d'utilisateur ayant le numéro unique d'identification concerné, à l'adresse correspondante dudit réseau de communication;
- vérification de la bonne réception des données;
- en cas de mauvaise réception des données, envoi d'un message contenant ledit numéro d'identification unique de ladite unité d'utilisateur spécifique, ce message étant envoyé à tout ou partie des unités d'utilisateur faisant partie dudit groupe;
- détection d'un message de retour d'une unité d'utilisateur dont le numéro d'identification unique correspond audit numéro d'identification contenu dans le message;
- détermination de l'adresse dans ledit réseau, de l'unité d'utilisateur ayant émis le message de retour;
- mémorisation dans la table du centre de gestion, de ladite adresse de l'unité d'utilisateur dans ledit réseau, en liaison avec ledit numéro d'identification unique de l'unité d'utilisateur ayant émis le message de retour.

Selon le procédé de l'invention, le centre de gestion détecte automatiquement un changement d'adresse de communication associée à une unité d'utilisateur spécifique. Cette détection automatique est possible grâce à l'utilisation d'une quittance. Il est à noter que cette phase de détection peut se faire sans gêner l'accès aux données par l'utilisateur, c'est-à-dire que celui-ci pourra continuer à utiliser le service et par exemple visualiser des données pendant la détection.

Le centre de détection se charge ensuite de la recherche de la nouvelle adresse correspondant à l'unité d'utilisateur spécifique recherchée. Cette recherche peut également être faite sans inconvénient pour l'utilisateur. Lorsque la nouvelle adresse est trouvée, elle et mémorisée dans la table en lieu et place de l'ancienne adresse. Cette table est ainsi mise à jour régulièrement, chaque fois qu'une adresse est modifiée. A partir de ce moment, un message peut être envoyé à l'unité d'utilisateur spécifique en utilisant la nouvelle adresse.

Pendant toutes ces opérations, l'utilisateur n'est pas empêché d'employer le service. Cette mise à jour se fait donc de manière totalement transparente pour lui.

### BREVE DESCRIPTION DES FIGURES

La présente invention et ses avantages seront mieux compris en référence à un mode de réalisation préféré de l'invention et aux dessins annexés dans lesquels :

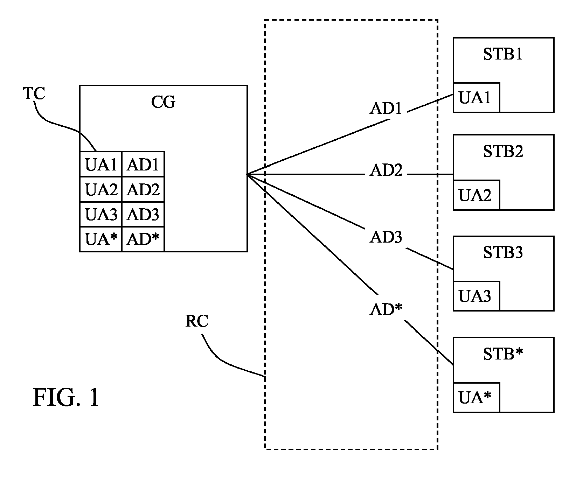

- la figure 1 représente l'ensemble du système auquel est appliqué le procédé de l'invention; et
- la figure 2 représente les étapes du procédé de l'invention.

### MANIÈRES DE RÉALISER L'INVENTION

En référence aux figures, le procédé de l'invention se déroule dans un environnement dans lequel des données telles que notamment des données accès conditionnel sont émises à destination d'unités d'utilisateurs STB. Ces données peuvent être notamment des données de télévision à péage ou des données associées à des services. Les unités d'utilisateur peuvent être un décodeur ou un ordinateur par exemple, contenant un module de sécurité. Les données sont émises par un fournisseur de données. Les droits d'accès et la gestion de l'envoi des données sont traités par un centre de gestion CG. Les données sont transmises aux unités d'utilisateur par le biais d'une ligne dans un réseau de communication RC telle que par exemple le réseau Internet. A cette ligne correspond une adresse de communication AD.

Les unités d'utilisateur STB gérées par un même centre de gestion CG font partie d'un groupe d'unités d'utilisateur. Chaque unité contient un module de sécurité ayant un numéro unique d'identification UA.

Chaque unité d'utilisateur est associée à une adresse AD du réseau de communication. Cette adresse est celle qui est utilisée par le centre de gestion pour transmettre un message à une unité d'utilisateur spécifique.

Le centre de gestion contient une table de correspondance TC entre l'adresse AD d'une unité d'utilisateur dans le réseau de communication et le numéro unique d'identification du module de sécurité correspondant.

En règle générale, cette adresse de communication ne change pas souvent. Il arrive toutefois qu'elle change de sorte que les messages envoyés à une unité d'utilisateur spécifique en utilisant l'adresse AD mémorisée dans la table ne puisse pas être délivrés.

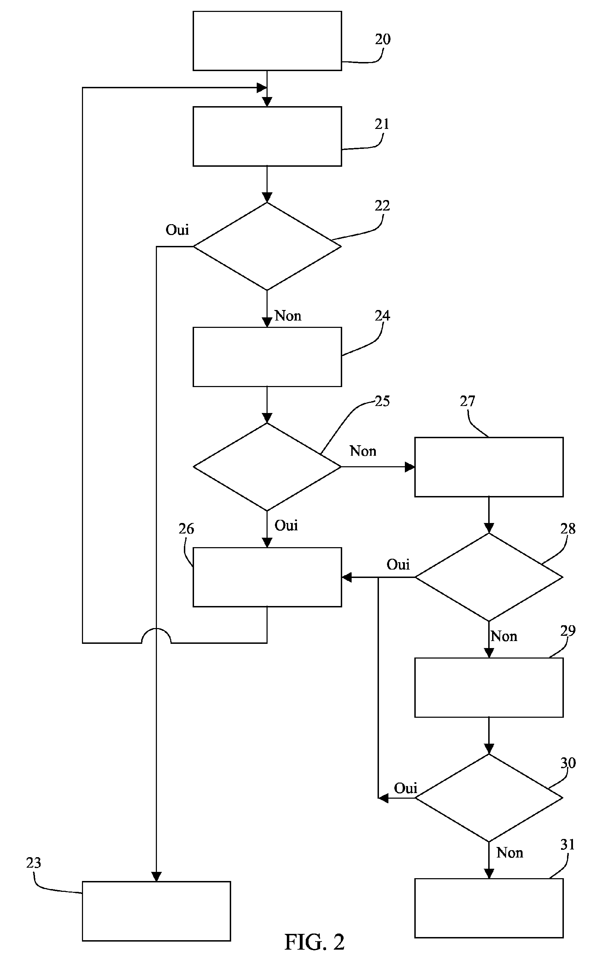

Dans le procédé de l'invention, lorsqu'un message doit être envoyé à une l'unité d'utilisateur spécifique STB*, le centre de gestion CG cherche dans la table de correspondance TC, quelle est l'adresse de communication AD* du réseau de communication correspondant au numéro unique d'identification UA* de l'unité d'utilisateur spécifique STB*. Ceci est illustré par l'étape 20 sur la figure 2. Le centre de gestion envoie ensuite le message à cette adresse, lors de l'étape 21. Dans l'étape suivante 22, le centre de gestion vérifie s'il a obtenu une quittance de la part de l'unité d'utilisateur concernée, indiquant que la réception du message est bonne. S'il reçoit cette quittance, les données de la table sont conservées telles quelles pour ce qui concerne l'unité d'utilisateur spécifique. Ceci est représenté par l'étape 23 sur la figure 2. Au contraire, en cas de non-réception du message, la table doit être mise à jour. La non-réception d'un message peut être signalée par un "message de non-délivrance" indiquant que le message initial n'a pas pu être délivré ou au contraire par l'absence de réception d'une quittance après un certain temps.

Pour la mise à jour de la table TC lorsque le message n'a pas pu être délivré, le centre de gestion émet une requête à destination d'un ensemble d'unités d'utilisateur ou de la totalité des unités d'utilisateur gérées par ce centre de gestion. Dans le mode de réalisation illustré, la requête est envoyée, lors de l'étape portant la référence 24, à un premier ensemble d'unités d'utilisateur. Cette requête contient au moins un identifiant de l'unité d'utilisateur spécifique recherchée ainsi qu'une commande demandant à l'unité d'utilisateur de renvoyer un message au centre de gestion. L'identifiant peut être en particulier le numéro unique d'identification UA*.

Lors d'une étape 25, le centre de gestion vérifie s'il a reçu un message de retour de la part de l'unité d'utilisateur spécifique STB*. Si tel est le cas, il détermine l'adresse AD* dans le réseau de communication qui a été utilisée pour envoyer le message de retour. Cette adresse est mémorisée dans la table de correspondance du centre de gestion, en regard du numéro unique d'identification UA* de l'unité d'utilisateur spécifique. Ceci correspond à l'étape 26 de la figure 2. Des messages peuvent ensuite être envoyés à l'unité d'utilisateur spécifique STB* en utilisant l'adresse spécifique AD*, conformément à l'étape 21 mentionnée précédemment.

Si, lors de l'étape précédente 25, le centre de gestion détermine qu'il n'a pas reçu de message de retour, il envoie une requête à un autre ensemble d'unités d'utilisateur. Ceci correspond à une étape portant la référence 27. Le centre de gestion vérifie ensuite, lors d'une étape 28, s'il a reçu un message de retour et met à jour la table de correspondance, lors de l'étape suivante 26 si un message a été reçu. Si aucun message n'a été reçu, le centre de gestion envoie un message à toutes les unités d'utilisateur dont il a la gestion. Ceci correspond à une étape 29. Il vérifie ensuite, lors d'une étape 30 s'il a reçu un message de retour et met à jour la table de correspondance si tel est le cas.

Si au contraire aucun message n'est reçu en retour, plusieurs solutions, symbolisées par la référence 31, sont envisageables. L'une d'elle consiste à relancer la procédure de mise à jour après avoir attendu un certain temps. Une autre consiste à ne plus envoyer de messages à l'unité d'utilisateur considérée et à mémoriser une indication dans la table, selon laquelle cette unité d'utilisateur n'est pas disponible. Dans ce cas, l'abonné qui possède cette unité d'utilisateur pourra demander la réactivation par exemple en téléphonant au centre de gestion.

Le procédé de l'invention a été décrit selon un mode de réalisation particulier dans lequel la requête est tout d'abord envoyée à un premier ensemble d'unités d'utilisateur, puis, si l'unité spécifique n'a pas été trouvée dans ce premier ensemble, à un deuxième ensemble d'unités d'utilisateur et finalement à toutes les unités d'utilisateur. Il est clair que le nombre d'ensembles peut être plus grand ou plus petit. Il est également possible d'envoyer la requête à toutes les unités d'utilisateur dès le premier envoi.

Il est aussi possible d'optimiser la recherche en choisissant comme membres du premier ensemble auquel la requête est envoyée, un certain nombre d'unités d'utilisateur parmi lesquelles les chances de trouver l'unité d'utilisateur spécifique recherchée sont les plus grandes. Ceci peut être déterminé par exemple à partir de la dernière adresse mémorisée par cette unité d'utilisateur.

## Revendications

1. Procédé de mise à jour d'une table de correspondance entre une adresse (AD) associée à une unité d'utilisateur dans un réseau de communication et un numéro unique d'identification (UA) associé à une unité d'utilisateur d'un groupe d'unités d'utilisateur gérés par un centre de gestion (CG), procédé dans lequel des données sont échangées entre ledit centre de gestion et au moins une unité d'utilisateur spécifique (STB*) dudit groupe par l'intermédiaire dudit réseau de communication, ces données étant acheminées à l'unité d'utilisateur spécifique (STB*) en utilisant l'adresse (AD*) de ladite unité d'utilisateur dans ledit réseau, **caractérisé en ce qu'**il comprend les étapes suivantes :
- recherche dans ladite table de correspondance, de l'adresse (AD*) de l'unité d'utilisateur dans ledit réseau de communication correspondant au numéro unique d'identification (UA*) de l'unité d'utilisateur spécifique (STB*);
- envoi de données à l'unité d'utilisateur (STB*) ayant le numéro unique d'identification (UA*) concerné, à l'adresse (AD*) correspondante dudit réseau de communication;
- vérification de la bonne réception des données;
- en cas de mauvaise réception des données, envoi d'une requête contenant un identifiant de ladite unité d'utilisateur spécifique (STB*), cette requête étant envoyée à tout ou partie des unités d'utilisateur (STB) faisant partie dudit groupe;
- détection d'un message de retour d'une unité d'utilisateur (STB*) dont le numéro d'identification unique (UA*) correspond audit identifiant contenu dans la requête;
- détermination de l'adresse (AD*) dans ledit réseau, utilisée par l'unité d'utilisateur (STB*) ayant émis le message de retour;
- mémorisation dans la table du centre de gestion, de ladite adresse (AD*) de l'unité d'utilisateur dans ledit réseau, en liaison avec ledit numéro d'identification unique (UA*) de l'unité d'utilisateur (STB*) ayant émis le message de retour.

2. Procédé de mise à jour d'une table de correspondance selon la revendication 1, **caractérisé en ce que** l'identifiant de ladite unité d'utilisateur spécifique (STB*) est ledit numéro d'identification unique (UA*) de cette unité d'utilisateur.

3. Procédé de mise à jour d'une table de correspondance selon la revendication 1, **caractérisé en ce que** l'on envoie la requête à un premier ensemble ne contenant pas toutes les unités d'utilisateur faisant partie dudit groupe d'unités d'utilisateur.

4. Procédé de mise à jour d'une table de correspondance selon la revendication 3, **caractérisé en ce que** le premier ensemble d'unités d'utilisateur est choisi en fonction de critères de probabilité de telle sorte que la probabilité que l'unité d'utilisateur spécifique (STB*) recherchée appartienne à ce premier ensemble est plus grande que la probabilité qu'elle appartienne à un autre ensemble contenant le même nombre d'unités d'utilisateur.
